# EUROPÄISCHE PATENTSCHRIFT

(11) **EP 3 767 102 B1**
(45) Veröffentlichungstag und Bekanntmachung des Hinweises auf die Patenterteilung: **12.11.2025**
(21) Anmeldenummer: 20176289.5
(22) Anmeldetag: 25.05.2020
(51) Int. Cl.: F03D 15/10

(54) **TRIEBSTRANGANORDNUNG**
DRIVE TRAIN ASSEMBLY
ENSEMBLE DE TRAIN D'ENTRAINEMENT

(30) Priorität: 18.07.2019 DE 102019119473
(43) Veröffentlichungstag der Anmeldung: 20.01.2021
(73) Patentinhaber: RENK GmbH, 86159 Augsburg (DE)
(72) Erfinder: Sfar, Mohamed, 59067 Hamm (DE); Walkowiak, Matthias, 45657 Recklinghausen (DE)
(74) Vertreter: Wallinger Ricker Schlotter Tostmann

(56) Entgegenhaltungen:
- WO-A2-2009/043330
- CN-A- 101 375 052
- US-A1- 2002 049 108
- US-A1- 2011 068 583
- US-A1- 2013 090 203

## Beschreibung

Die Erfindung betrifft eine Triebstranganordnung nach dem Oberbegriff des Patentanspruchs 1.

Zur Erzeugung elektrischer Energie ist ein Generator bei Windkraftanlagen üblicherweise zusammen mit dem Rotor am oberen Ende des Turms angeordnet. Die Drehgeschwindigkeit der Rotoren liegt typischerweise im Bereich zwischen 0 und 12 Umdrehungen pro Minute. Für solche niedrigen Drehgeschwindigkeiten geeignete Direktläufer-Generatoren weisen ein sehr hohes Gewicht auf. Dies führt bei hohen elektrischen Leistungen im Megawattbereich zu sehr hohen Gewichten von Rotor mit Maschinengondel. Daher wird zwischen Rotor und Generator normalerweise ein Getriebe geschaltet, um die Verwendung von schnell laufenden Generatoren zu ermöglichen, die eine deutliche Gewichtsreduzierung gewährleisten.

Die DE 199 17 605 A1 basiert auf einem Aufsteckgetriebe, das durch einen Pressverband mit der Rotorwelle einer Windanlage verbunden ist, mit der die Windkraft in ein Getriebe eingeleitet wird. Die Windanlage offenbart eine mehrstufige Planetengetriebeanordnung und eine Stirnradstufe zum Abtrieb in einen Generator. Der Krafteintrieb in die Planetengetriebeanordnung erfolgt dabei über ein Hohlrad, das auf mindestens ein Planetenrad treibt, auf dessen gehäusefester Welle jeweils ein weiteres Planetenrad angeordnet ist, das mit einem Sonnenrad kämmt, von dem der Abtrieb in die Stirnradstufe erfolgt.

Aus der DE 20 2018 100 231 U1 ist ferner eine Anordnung bekannt, bei der die Lagerung des Rahmengetriebes gleichzeitig auch die Lagerung des Rotors mit der Rotorwelle ist. Deshalb erübrigt sich ein zusätzliches Lager für den Rotor mit der Rotorwelle, wodurch das Kopfgewicht einer Windkraftanlage bei gleicher elektrischer Leistung weiter verringert wird.

Die DE 10 2011 106 535 A1 betrifft einen Antriebsstrang einer Strömungskraftanlage, insbesondere einer Windkraftanlage oder einer Meeresströmungskraftanlage, der eine Rotornabe umfasst, welche zumindest ein Rotorblatt trägt, und ein mehrere Planetenstufen aufweisendes Getriebe, welches eine Drehbewegung einer mit der Rotornabe verbundenen Rotorwelle übersetzt und auf einen Antrieb eines nachfolgenden Generators überträgt. Dabei sind die Rotornabe, das Getriebe und der Generator koaxial zueinander angeordnet. Die Druckschrift offenbart weiterhin einen Antriebsstrang einer Strömungskraftanlage, bei welchem auf kompakte Art und Weise eine geeignete Übersetzung einer Drehbewegung einer Rotorwelle über ein Getriebe, das als leistungsverzweigtes Getriebe mit drei Planetenstufen ausgeführt ist, auf einen Antrieb eines nachfolgenden Generators darstellbar ist.

Die vorstehenden Getriebeanordnungen sind komplex aufgebaut und weisen große Baulängen auf, da sämtliche Komponenten sequentiell hintereinander angeordnet sind. Darüber hinaus sind die Montage bzw. Demontage und die Wartung der entsprechenden Komponenten sehr aufwändig.

Aus der WO 2009/043330 A2 ist eine Getriebe- und Generatoranordnung einer Windkraftanlage bekannt, bei der in Axialrichtung einer Rotorwelle zwischen einem Getriebe und einem Generator eine Verbindungsplatte vorgesehen ist. Diese Verbindungsplatte ist integraler Bestandteil eines Gehäuses, zu dem einerseits der Verbindungsplatte ein Generatorgehäuse und andererseits der Verbindungsplatte ein Getriebegehäuse gehört.

Es ist daher Aufgabe der vorliegenden Erfindung, eine Triebstranganordnung, vorzugsweise für Windkraftanlagen, bereitzustellen, die bei gleicher Systemleistung das Gewicht von Rotor und Maschinengondel weiter reduziert, die Montage vereinfacht und die Baulänge kompakter gestaltet.

Diese Aufgabe wird durch die Merkmalskombination gemäß Patentanspruch 1 gelöst.

Erfindungsgemäß wird eine Triebstranganordnung vorzugsweise für eine Windkraftanlage mit einer Rotorwelle, einem Generator und einem Getriebe, das mittelbar oder unmittelbar mit der Rotorwelle und dem Generator verbunden ist, vorgeschlagen. Dabei ist das Getriebe zumindest teilweise oder vollständig in die Rotorwelle integriert. Dadurch ist der gesamte Triebstrang kompakter ausgebildet und das Gesamtgewicht der Komponenten reduziert.

In Axialrichtung der Rotorwelle betrachtet ist zwischen dem Generator und dem Getriebe ein ortsfester Maschinenträger angeordnet, an dem der Generator unmittelbar auf der einen Seite und das Getriebe mittelbar oder unmittelbar an der diametral gegenüberliegenden Seite in Axialrichtung betrachtet fixiert sind. Der ortsfeste Maschinenträger stützt die Reaktionsmomente des Getriebes und des Generators ab.

Ein entscheidender Vorteil dieser Triebstranganordnung liegt in der kompakten Bauweise mit gleichzeitiger Demontierbarkeit der Einzelkomponenten Generator und Getriebe aus dem Triebstrang, ohne dass ein Rückbau des Rotors erforderlich ist. Ein wesentlicher Bestandteil, um dies zu erreichen, ist der Maschinenträger. Dadurch weist der Triebstrang einen wesentlichen Vorteil gegenüber vollintegrierten Triebsträngen auf, bei denen für die Demontage des Getriebes zunächst der Rotor
der Windkraftanlage zu demontieren ist.

Vorzugsweise ist die Triebstranganordnung derart ausgebildet, dass das Getriebe mittels einer drehsteifen Kupplung mit der Rotorwelle verbunden ist. Dabei ist die kompakte Bauweise und eine spielfreie, winkelgetreue Übertragung der Drehmomente aufgrund einer sehr hohen Verdrehsteifigkeit günstig.

In einem Ausführungsbeispiel der Erfindung ist vorgesehen, dass die Rotorwelle mittels außen angebrachten Gleitlagern oder Wälzlagern an einer Umgebungsstruktur gelagert ist. Auf diese Weise werden Gewichtskräfte und Windlasten, die auf die Rotorwelle wirken, an der Umgebungsstruktur abgestützt.

Ferner ist eine Ausführung günstig, bei der der Generator mit einer Antriebswelle verbunden ist, die die Abtriebswelle des Getriebes darstellt. Dadurch kann wiederum der gesamte Triebstrang kompakter und leichter ausgebildet werden.

In einer weiteren vorteilhaften Variante ist erfindungsgemäß vorgesehen, dass das Getriebe als ein Planetengetriebe ausgebildet ist. Das Planetengetriebe zeichnet sich durch einen hohen Wirkungsgrad aus und ermöglicht aufgrund seiner kompakten Bauform eine Reduzierung der Baulänge bei hoher Leistungsdichte.

Die erfindungsgemäße Triebstranganordnung ist in einer Ausführungsvariante ausgebildet, dass das Getriebe wenigstens zwei Planetenstufen aufweist, deren Hohlräder mittelbar durch Gehäusebauteile oder unmittelbar und rotationsfest aneinander fixiert sind, wodurch ein sequentieller Gehäuseverbund aus mindestens den Hohlrädern ausgebildet ist. Aufgrund mehrerer Planetenstufen bzw. des sequentiellen Gehäuseverbunds wird die Leistungsdichte des Getriebes weiter gesteigert. Entsprechend umlaufen sämtliche Hohlräder mit der Antriebsdrehzahl, wodurch eine Leistungsverzweigung auf die einzelnen Planetenstufen des Getriebes sowie die Integration des Getriebes in die Rotorwelle ermöglicht wird. Ferner reduziert insbesondere die Verwendung eines Hohlrades sowohl das Volumen als auch die Masse des Getriebes.

Es ist noch anzumerken, dass die Hohlräder und der Gehäuseverbund mit der Rotorwelle verbunden sind und damit mit der Rotordrehzahl umlaufen.

Weiter vorteilhaft ist es, wenn das Getriebe einen Planetenträger aufweist, der mittels einer drehsteifen Kupplung mit dem Maschinenträger verbunden ist. Dabei ist günstig, dass die Abstützung der Reaktionsmomente des Getriebes an dem Maschinenträger mittels des Planetenträgers erfolgt.

In einer Ausführung der vorliegenden Triebstranganordnung ist ferner vorgesehen, dass das Getriebe eine Sonne aufweist, die zum Antreiben der Abtriebswelle des Getriebes mit dieser gekoppelt ist. Vorteilhaft daran ist, dass der Antrieb des Generators über die Sonne der schnell rotierenden Planetenstufe erfolgt, da in dieser Planetenstufe die Leistung eines Planetengetriebes entsprechend summiert wird.

Vorzugsweise ist die Triebstranganordnung derart ausgebildet, dass die Abtriebswelle des Getriebes mittels einer elastischen Kupplung mittelbar oder unmittelbar mit dem Generator verbunden ist. Dabei ist günstig, dass die elastische Kupplung große Drehmomente bei kleiner Baugröße überträgt, Stöße und Schwingungen aufnimmt bzw. Drehmomentspitzen dämpft.

In einer alternativen Ausführung der vorliegenden Erfindung ist vorgesehen, dass die elastische Kupplung oder eine damit verbundene Zwischenwelle durch eine zentrale Öffnung im Maschinenträger hindurch ragt und mit dem Generator verbunden ist.

In einer vorteilhaften Ausführungsvariante ist vorgesehen, dass zwischen der elastischen Kupplung und dem Generator eine Bremsvorrichtung, vorzugsweise ausgebildet mit einer Bremsscheibe und einer Bremse, angeordnet ist, wobei die Bremsvorrichtung unmittelbar mit dem Maschinenträger und mittelbar oder unmittelbar mit der elastischen Kupplung verbunden ist. Durch die Bremsvorrichtung wird beispielsweise eine Notabschaltung oder ein manueller Stopp bei Wartung oder Reparatur der Windkraftanlage ermöglicht. Ein weiterer Vorteil ist die Abstützung der Reaktionsmomente der Bremsvorrichtung an dem Maschinenträger.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigt:

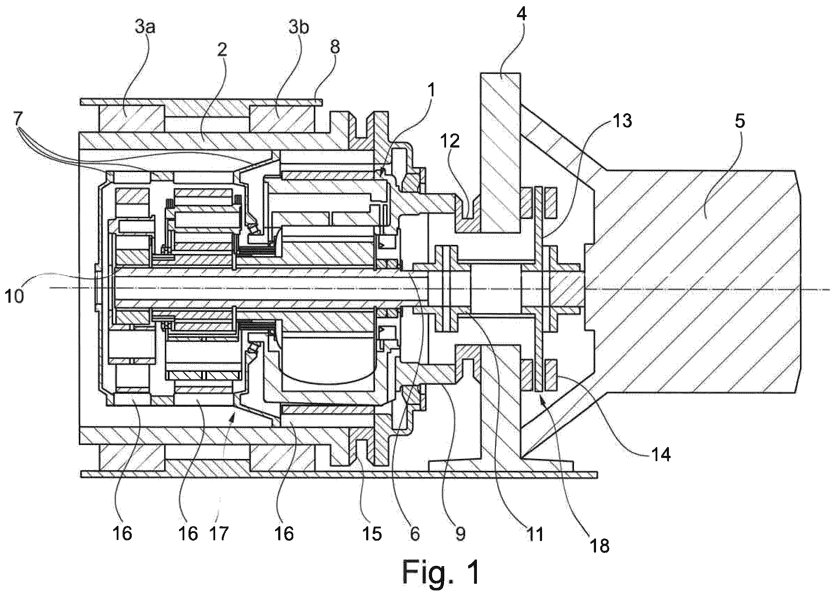

Fig. 1 eine Schnittdarstellung einer Triebstranganordnung.

In Figur 1 ist eine Schnittdarstellung einer Triebstranganordnung für eine Windkraftanlage mit einer Rotorwelle 2, einem Generator 5 und einem Getriebe 1 dargestellt. Das Getriebe 1 ist als ein Planetengetriebe ausgebildet. Ferner ist die Rotorwelle 2 mittels zwei außenumfänglich angeordneten Wälzlagern 3a, 3b an einer Umgebungsstruktur 8 der Windkraftanlage gelagert und das Planetengetriebe 1 durch eine drehsteife Kupplung 15 mittelbar mit der Rotorwelle 2 verbunden. Optional zu den Wälzlagern 3a, 3b können auch Gleitlager eingesetzt werden. Dabei ist das Planetengetriebe 1 teilweise in die Rotorwelle 2 integriert und mittelbar mit dem Generator 5 verbunden.

In Axialrichtung der Rotorwelle 2 betrachtet ist der Generator 5 von einem Endstück der Rotorwelle 2 und dem Planetengetriebe 1 beabstandet angeordnet. In dieser Axialrichtung ist zwischen dem Generator 5 und dem Planetengetriebe 1 ein ortsfester Maschinenträger 4 angeordnet. Der Maschinenträger 4 ist an der Umgebungsstruktur 8 der Windkraftanlage fixiert.

In einer sich zur Axialrichtung der Rotorwelle 2 orthogonal verlaufenden Radialrichtung erstreckt sich der Maschinenträger 4 mit einer zentralen Durchgangsöffnung in Axialrichtung.

Ferner sind der Generator 5 unmittelbar auf der von der Rotorwelle 2 beabstandeten Seite und das Getriebe 1 mittelbar an der diametral gegenüberliegenden Seite an dem Maschinenträger 4 fixiert. Dabei weist das Planetengetriebe 1 einen Planetenträger 9 auf, der mittels einer drehsteifen Kupplung 12 mit dem Maschinenträger 4 verbunden ist.

Das Planetengetriebe 1 weist eine Sonne 10 auf, die zum Antreiben der Abtriebswelle 6 des Getriebes 1 mit dieser gekoppelt ist. Ferner ist der Generator 5 mit einer Antriebswelle gekoppelt, die die Abtriebswelle 6 des Planetengetriebes 1 darstellt. Diese Abtriebswelle 6 ist wiederum mittels einer elastischen Kupplung 11 mittelbar mit dem Generator 5 verbunden. Eine Generatorwelle liegt auf der gleichen Rotationsachse, wie die Abtriebswelle 6 und die Rotorwelle 2. Die zentrale Durchgangsöffnung des Maschinenträgers 4 ist im Bereich dieser Rotationsachse angeordnet und derart ausgebildet, dass eine mit der elastischen Kupplung 11 verbundene Zwischenwelle durch die Durchgangsöffnung hindurch ragt und mit dem Generator 5 gekoppelt ist.

Darüber hinaus zeigt Figur 1, dass das Planetengetriebe 1 drei Planetenstufen aufweist, deren Hohlräder 16 mittelbar durch Gehäusebauteile 7 rotationsfest aneinander fixiert sind, wodurch ein sequentieller Gehäuseverbund 17 ausgebildet ist.

Außerdem ist zwischen der elastischen Kupplung 11 und dem Generator 5 eine Bremsvorrichtung 18 mit einer Bremsscheibe 13 und einer Bremse 14 angeordnet. Die dargestellte Bremse 14 ist unmittelbar mit dem Maschinenträger 4 verbunden und die Bremsscheibe 13 an die Zwischenwelle gekoppelt.

### Bezugszeichenliste

- **1**: Getriebe
- **2**: Rotorwelle
- **3a, 3b**: Lager
- **4**: Maschinenträger
- **5**: Generator
- **6**: Abtriebswelle
- **7**: Gehäusebauteil
- **8**: Umgebungsstruktur
- **9**: Planetenträger
- **10**: Sonne
- **11**: elastische Kupplung
- **12**: drehsteife Kupplung
- **13**: Bremsscheibe
- **14**: Bremse
- **15**: drehsteife Kupplung
- **16**: Hohlrad
- **17**: sequentieller Gehäuseverbund
- **18**: Bremsvorrichtung

## Patentansprüche

1. Triebstranganordnung vorzugsweise für eine Windkraftanlage mit einer Rotorwelle (2), einem Generator (5) und einem Getriebe (1), das mittelbar oder unmittelbar mit der Rotorwelle (2) und dem Generator (5) verbunden ist, wobei das Getriebe (1) zumindest teilweise oder vollständig in die Rotorwelle (2) integriert ist, wobei in Axialrichtung der Rotorwelle (2) betrachtet zwischen dem Generator (5) und dem Getriebe (1) ein ortsfester Maschinenträger (4) angeordnet ist, an dem der Generator (5) unmittelbar auf der einen Seite und das Getriebe (1) mittelbar oder unmittelbar an der diametral gegenüberliegenden Seite fixiert sind, **dadurch gekennzeichnet dass** der ortsfeste Maschinenträger (4) an einer Umgebungsstruktur (8) der Windkraftanlage fixiert ist und wobei mittels des ortsfesten Maschinenträgers (4) die Reaktionsmomente des Getriebes (1) und des Generators (5) abgestützt werden, so dass der Generator (5) und das Getriebe (1) aus dem Triebstrang demontiert werden können, ohne dass ein Rückbau eines Rotors erforderlich ist.

2. Triebstranganordnung gemäß Anspruch 1, wobei das Getriebe (1) mittels einer drehsteifen Kupplung (15) mit der Rotorwelle (2) verbunden ist.

3. Triebstranganordnung gemäß Anspruch 1 oder 2, wobei die Rotorwelle (2) mittels außen angebrachten Gleitlagern (3a, 3b) oder Wälzlagern (3a, 3b) an einer Umgebungsstruktur (8) gelagert ist.

4. Triebstranganordnung gemäß einem der vorherigen Ansprüche, wobei der Generator (5) mit einer Antriebswelle verbunden ist, die die Abtriebswelle (6) des Getriebes (1) darstellt.

5. Triebstranganordnung gemäß einem der vorherigen Ansprüche, wobei das Getriebe (1) als ein Planetengetriebe ausgebildet ist.

6. Triebstranganordnung gemäß Anspruch 5, wobei das Getriebe (1) wenigstens zwei Planetenstufen aufweist, deren Hohlräder (16) mittelbar durch Gehäusebauteile (7) oder unmittelbar und rotationsfest aneinander fixiert sind, wodurch ein sequentieller Gehäuseverbund (17) aus mindestens den Hohlrädern (16) ausgebildet ist.

7. Triebstranganordnung gemäß Anspruch 6, wobei das Getriebe (1) einen Planetenträger (9) aufweist, der mittels einer drehsteifen Kupplung (12) mit dem Maschinenträger (4) verbunden ist.

8. Triebstranganordnung gemäß Anspruch 6, wobei das Getriebe (1) eine Sonne (10) aufweist, die zum Antreiben der Abtriebswelle (6) des Getriebes (1) mit dieser gekoppelt ist.

9. Triebstranganordnung gemäß einem der vorherigen Ansprüche, wobei die Abtriebswelle (6) des Getriebes (1) mittels einer elastischen Kupplung (11) mittelbar oder unmittelbar mit dem Generator (5) verbunden ist.

10. Triebstranganordnung gemäß Anspruch 9, wobei die elastische Kupplung (11) oder eine damit verbundene Zwischenwelle durch eine zentrale Öffnung im Maschinenträger (4) hindurch ragt und mit dem Generator (5) verbunden ist.

11. Triebstranganordnung gemäß einem dem vorherigen Anspruch 9 oder 10, wobei zwischen der elastischen Kupplung (11) und dem Generator (5) eine Bremsvorrichtung (18), vorzugsweise ausgebildet mit einer Bremsscheibe (13) und einer Bremse (14), angeordnet ist, wobei die Bremsvorrichtung (18) unmittelbar mit dem Maschinenträger (4) und mittelbar oder unmittelbar mit der elastischen Kupplung (11) verbunden ist.

## Claims

1. A drive train arrangement, preferably for a wind energy installation, comprising a rotor shaft (2), a generator (5) and a transmission (1), which is connected directly or indirectly to the rotor shaft (2) and the generator (5), wherein the transmission (1) is at least partially or completely integrated into the rotor shaft (2), wherein, when viewed in the axial direction of the rotor shaft (2), a machine carrier (4) that is fixed as regards its position is arranged between the generator (5) and the transmission (1), to which machine carrier (4) fixed as regards its position the generator (5) is fixed directly on the one side, and the transmission (1) is fixed directly or indirectly on the diametrically opposite side, **characterised in that** the machine carrier (4) that is fixed as regards its position is fixed to a surrounding structure (8) of the wind energy installation, and wherein the reaction moments of the transmission (1) and of the generator (5) are absorbed by means of the machine carrier (4) that is fixed as regards its position, so that the generator (5) and the transmission (1) can be removed from the drive train without there being a need to dismantle a rotor.

2. The drive train arrangement according to claim 1, wherein the transmission (1) is connected to the rotor shaft (2) by means of a coupling (15) which resists torsion.

3. The drive train arrangement according to claim 1 or 2, wherein the rotor shaft (2) is supported on a surrounding structure (8) by means of externally mounted plain bearings (3a, 3b) or roller bearings (3a, 3b).

4. The drive train arrangement according to any one of the preceding claims, wherein the generator (5) is connected to a drive shaft which constitutes the output shaft (6) of the transmission (1).

5. The drive train arrangement according to any one of the preceding claims, wherein the transmission (1) is constructed as a planetary transmission.

6. The drive train arrangement according to claim 5, wherein the transmission (1) has at least two planetary stages, the ring gears (16) of which are fixed to each other indirectly by means of housing components (7) or in a direct and rotationally fixed manner, thereby forming a sequential housing assembly (17) formed from at least the ring gears (16).

7. The drive train arrangement according to claim 6, wherein the transmission (1) has a planet carrier (9) which is connected to the machine carrier (4) by means of a coupling (12) which resists torsion.

8. The drive train arrangement according to claim 6, wherein the transmission (1) has a sun gear (10) which is coupled to the output shaft (6) of the transmission (1) in order to drive said output shaft (6).

9. The drive train arrangement according to any one of the preceding claims, wherein the output shaft (6) of the transmission (1) is connected directly or indirectly to the generator (5) by means of an elastic coupling (11).

10. The drive train arrangement according to claim 9, wherein the elastic coupling (11) or an intermediate shaft connected thereto protrudes through a central opening in the machine carrier (4) and is connected to the generator (5).

11. The drive train arrangement according to any one of the preceding claims 9 or 10, wherein a braking device (18), preferably constructed with a brake disc (13) and a brake (14), is arranged between the elastic coupling (11) and the generator (5), wherein the braking device (18) is directly connected to the machine carrier (4) and is connected directly or indirectly to the elastic coupling (11).

## Revendications

1. Agencement de train de puissance de préférence pour une éolienne avec un arbre de rotor (2), un générateur (5) et une transmission (1) qui est reliée indirectement ou directement à l'arbre de rotor (2) et au générateur (5), dans lequel la transmission (1) est intégrée au moins partiellement ou entièrement à l'arbre de rotor (2), dans lequel, vu dans la direction axiale de l'arbre de rotor (2), un support de machine fixe (4) est disposé entre le générateur (5) et la transmission (1), sur lequel sont fixés le générateur (5) directement d'un côté et la transmission (1) indirectement ou directement sur le côté diamétralement opposé, **caractérisé en ce que** le support de machine fixe (4) est fixé à une structure environnante (8) de l'éolienne et dans lequel les couples de réaction de la transmission (1) et du générateur (5) sont soutenus au moyen du support de machine fixe (4) de sorte que le générateur (5) et la transmission (1) peuvent être démontés du train de puissance sans qu'un démontage d'un rotor soit nécessaire.

2. Agencement de train de puissance selon la revendication 1, dans lequel la transmission (1) est reliée à l'arbre de rotor (2) au moyen d'un accouplement rigide en torsion (15).

3. Agencement de train de puissance selon la revendication 1 ou 2, dans lequel l'arbre de rotor (2) est monté sur une structure environnante (8) au moyen de paliers lisses (3a, 3b) ou de paliers à roulement (3a, 3b) placés à l'extérieur.

4. Agencement de train de puissance selon l'une quelconque des revendications précédentes, dans lequel le générateur (5) est relié à un arbre d'entraînement qui représente l'arbre de sortie (6) de la transmission (1).

5. Agencement de train de puissance selon l'une quelconque des revendications précédentes, dans lequel la transmission (1) est réalisée comme un engrenage planétaire.

6. Agencement de train de puissance selon la revendication 5, dans lequel la transmission (1) présente au moins deux étages planétaires, dont les couronnes (16) sont fixées l'une à l'autre indirectement par des composants de boîtier (7) ou directement et de manière solidaire en rotation, ce qui a pour effet qu'un ensemble de boîtier séquentiel (17) est réalisé à partir d'au moins les couronnes (16).

7. Agencement de train de puissance selon la revendication 6, dans lequel la transmission (1) présente un porte-satellites (9) qui est relié au support de machine (4) au moyen d'un accouplement (12) rigide en torsion.

8. Agencement de train de puissance selon la revendication 6, dans lequel la transmission (1) présente un solaire (10) qui pour entraîner l'arbre de sortie (6) de la transmission (1) est couplé à celui-ci.

9. Agencement de train de puissance selon l'une quelconque des revendications précédentes, dans lequel l'arbre de sortie (6) de la transmission (1) est relié au générateur (5) indirectement au moyen d'un accouplement élastique (11) ou directement.

10. Agencement de train de puissance selon la revendication 9, dans lequel l'accouplement élastique (11) ou un arbre intermédiaire y étant relié dépasse à travers une ouverture centrale dans le support de machine (4) et est relié au générateur (5).

11. Agencement de train de puissance selon l'une quelconque des revendications précédentes 9 ou 10, dans lequel un dispositif de freinage (18), de préférence réalisé avec un disque de frein (13) et un frein (14), est disposé entre l'accouplement élastique (11) et le générateur (5), dans lequel le dispositif de freinage (18) est relié directement au support de machine (4) et indirectement ou directement à l'accouplement élastique (11).
